# EUROPEAN PATENT APPLICATION

(11) **EP 4 756 924 A1**
(43) Date of publication of application: **10.06.2026**
(21) Application number: 24849062.5
(22) Date of filing: 25.07.2024
(51) Int. Cl.: H01M 4/525, C01G 53/00, H01M 4/36, H01M 4/505

(54) **POSITIVE ELECTRODE ACTIVE MATERIAL FOR LITHIUM ION SECONDARY BATTERIES, METHOD FOR PRODUCING POSITIVE ELECTRODE ACTIVE MATERIAL FOR LITHIUM ION SECONDARY BATTERIES, AND LITHIUM ION SECONDARY BATTERY**

(30) Priority: 28.07.2023 JP 2023123254
(71) Applicant: SUMITOMO METAL MINING CO., LTD., Tokyo 105-8716 (JP); NATIONAL UNIVERSITY CORPORATION YOKOHAMA NATIONAL UNIVERSITY, Yokohama-shi Kanagawa 240-8501 (JP)
(72) Inventor: AIDA, Taira, Niihama-shi, Ehime 792-0002 (JP); HAYASHI, Kazuhide, Niihama-shi, Ehime 792-0002 (JP); YABUUCHI, Naoaki, Yokohama-shi, Kanagawa 240-8501 (JP)
(74) Representative: Watermeyer, Nicholas
(86) International application number: PCT/JP2024/026705
(87) International publication number: WO 2025/028408

(57) **Abstract**

A positive electrode active material for lithium ion secondary batteries containing secondary particles in which a plurality of primary particles are mutually agglomerated contains: a lithium transition metal complex oxide having a layered rock salt-type structure; and crystallized lithium phosphate. In a crystal structure analysis of the lithium transition metal complex oxide having the layered rock salt-type structure by neutron diffraction, a ratio by which an element other than lithium occupies a lithium site (3b site) is 3% or greater and 8% or less.

## Description

### TECHNICAL FIELD

The present invention relates to a positive electrode active material for lithium ion secondary batteries, a method for manufacturing a positive electrode active material for lithium ion secondary batteries, and a lithium ion secondary battery.

### BACKGROUND ART

In recent years, a secondary battery with a high energy density is strongly desired in order to extend the driving range of electric vehicles (hereinafter, also referred to as "EV"). As such a secondary battery, a lithium ion secondary battery using lithium, a lithium alloy, a metal oxide, or carbon as a negative electrode has attracted attention.

For the purpose of further improving the performance of lithium ion secondary batteries, studies have been conducted and proposals have been submitted regarding positive electrode active materials used in the lithium ion secondary batteries.

For example, LiNi_{1-x-y}CoₓAl_{y}O₂ (hereinafter also referred to as "NCA") is known as a positive electrode active material used in the positive electrode of a lithium ion secondary battery for EVs. NCA is a positive electrode active material obtained by substituting Co and Al for part of Ni of lithium nickelate: LiNiO₂ (hereinafter also referred to as "LNO"). The Co substitution inhibits changes of the crystal structure during charging and discharging, and the Al substitution improves thermal stability.

For example, PTL 1 discloses a positive electrode mixture material for nonaqueous electrolyte secondary batteries, which contains a particle-shaped positive electrode active material composed of a transition metal complex oxide, and raises lithium cobaltate (LiCoO₂) and the like as examples of the transition metal complex oxide.

PTL 2 discloses positive electrode active material particles containing a lithium salt of a transition oxide having a layered rock salt-type structure. PTL 2 discloses LiNiₓCo_{y}M_{z}O₂ (where M represents Al or Mn, 0<x<1, 0<y<1, and x+y+z=1) as the lithium salt of the transition oxide having the layered rock salt-type structure.

### CITATION LIST

### PATENT LITERATURE

PTL 1: Japanese Patent Application Laid-Open Publication No. 2020-136093
PTL 2: Japanese Patent Application Laid-Open Publication No. 2016-110714

### SUMMARY OF THE INVENTION

### TECHNICAL PROBLEM

However, the positive electrode active materials disclosed in PTLs 1 and 2 have a problem that when they are applied to lithium ion secondary batteries and charged and discharged repeatedly, they would undergo a large capacity loss.

In view of the problem of the prior art, it is an object of an aspect of the present invention to provide a positive electrode active material for lithium ion secondary batteries, having excellent cycle characteristics when used in a lithium ion secondary battery.

### SOLUTION TO THE PROBLEM

To solve the problem described above, according to one embodiment of the present invention, a positive electrode active material for lithium ion secondary batteries, including secondary particles in which a plurality of primary particles are mutually agglomerated, is provided. The positive electrode active material contains: a lithium transition metal complex oxide having a layered rock salt-type structure; and crystallized lithium phosphate. In a crystal structure analysis of the lithium transition metal complex oxide having the layered rock salt-type structure by neutron diffraction, a ratio by which an element other than lithium occupies a lithium site (3b site) is 3% or greater and 8% or less.

### ADVANTAGEOUS EFFECTS OF THE INVENTION

According to one embodiment of the present invention, it is possible to provide a positive electrode active material for lithium ion secondary batteries, having excellent cycle characteristics when used in a lithium ion secondary battery.

### BRIEF DESCRIPTION OF THE DRAWINGS

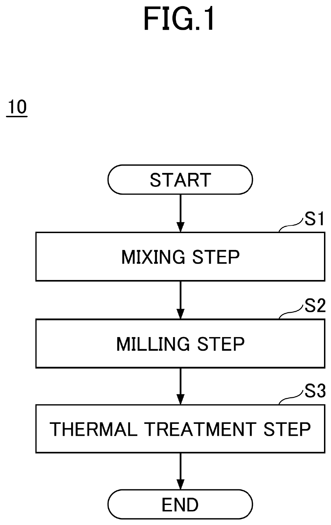

[FIG. 1] FIG. 1 shows a flow of a method for manufacturing a positive electrode active material for lithium ion secondary batteries.

### DETAILED DESCRIPTION OF THE INVENTION

Hereinafter, an embodiment of the present invention will be described with reference to the drawing. However, the present invention is not limited to the following embodiments, and various modifications and substitutions are applicable to the following embodiments without departing from the scope of the present invention.

### [Positive Electrode Active Material for Lithium Ion Secondary Battery]

Hereinafter, a positive electrode active material for lithium ion secondary batteries (hereinafter, also referred to simply as "positive electrode active material", and a lithium ion secondary battery is also referred to simply as a "secondary battery") according to the present embodiment will be described.

### (1) Positive Electrode Active Material

A positive electrode active material according to the present embodiment contains a lithium transition metal complex oxide having a layered rock salt-type structure, and crystallized lithium phosphate. The positive electrode active material of the present embodiment may consist only of the lithium transition metal complex oxide and the crystallized lithium phosphate. Yet, even in this case, the positive electrode active material is not excluded from containing unavoidable impurities that might be mixed in the positive electrode active material in the manufacturing process or the like.

### (1-1) Form of Particles

The form of particles of the positive electrode active material of the present embodiment is not particularly limited, but the positive electrode active material of the present embodiment may include secondary particles in which a plurality of primary particles are mutually agglomerated. Therefore, the positive electrode active material of the present embodiment may consist only of the secondary particles, or may contain primary particles existing singly without being agglomerated, in addition to the secondary particles.

The particles of the positive electrode active material of the present embodiment may include particles of a lithium transition metal complex oxide, and the primary particles and the secondary particles contained in the positive electrode active material of the present embodiment may be primary particles and secondary particles of the lithium transition metal complex oxide.

The general form of the particles of the positive electrode active material of the present embodiment can be confirmed from an image observed by a scanning electron microscope (SEM) (hereinafter, also referred to as "SEM image") of the particle appearance. However, such an observation may lack accuracy. For the positive electrode active material according to the present embodiment, it is preferable to process the particles to obtain a cross-section of the particles, and to determine the presence or absence of primary particles and secondary particles using a SEM image of the cross-section.

More specifically, for example, it is preferable to embed the particles of the positive electrode active material in a resin, and bring the particles into a state in which a cross-section of the particles can be observed, by cross-section polisher (CP) processing and the like, to observe a SEM image of the cross-section, and to determine the presence or absence of primary particles and secondary particles. For the determination, it is preferable to subject 50 or more particles to the evaluation described above. Although the upper limit of the number of particles to be evaluated is not particularly limited, it is preferable to evaluate 200 or less particles, considering the productivity of the evaluation.

When employing the band contrast of the Electron BackScatter Diffraction (hereinafter, also referred to as "EBSD") method or employing a Focused Ion Beam (FIB) processing apparatus for cross-section processing, the cross-section of the particles may be observed from an image observed with a Scanning Ion Microscope (SIM) provided as an accessory.

It is preferable that at least a part of the surfaces of the primary particles of the lithium transition metal complex oxide having a layered rock salt-type structure is coated with the crystallized lithium phosphate contained in the positive electrode active material of the present embodiment. Furthermore, it is preferable that the crystallized lithium phosphate is dispersed in the secondary particles of the lithium transition metal complex oxide having a layered rock salt-type structure or on the surfaces of the secondary particles of the lithium transition metal complex oxide having a layered rock salt-type structure.

By at least a part of the surfaces of the primary particles of the lithium transition metal complex oxide being coated with the crystallized lithium phosphate and the crystallized lithium phosphate being dispersed in the secondary particles of the lithium transition metal complex oxide or on the surfaces of the secondary particles of the lithium transition metal complex oxide, the cycle characteristics of a secondary battery can be improved when the positive electrode active material of the present embodiment is applied to the secondary battery. Although the cause for this is not clear, it is considered that the lithium phosphate deployed on the surfaces of the primary particles of the lithium transition metal complex oxide and in the secondary particles of the lithium transition metal complex oxide or on the surfaces of the secondary particles of the lithium transition metal complex oxide can inhibit a reaction between an electrolyte and the lithium transition metal complex oxide, and that the lithium phosphate eases expansion and shrinkage of the lithium transition metal complex oxide caused by charging and discharging.

### (1-2) Ratio by Which Element Other Than Lithium Occupies Lithium Site (3b Site)

In a neutron diffraction crystal structure analysis of the lithium transition metal complex oxide having a layered rock salt-type structure contained in the positive electrode active material according to the present embodiment, the ratio by which an element other than lithium occupies the lithium site (3b site) is preferably 3% or greater and 8% or less, and more preferably 4% or greater and 7% or less.

The ratio by which an element other than lithium occupies the lithium site (3b site) means the ratio by which an element other than lithium and oxygen, for example, a metal element other than lithium, occupies the lithium site (3b site). The ratio by which an element other than lithium occupies the lithium site (3b site) is obtained by analyzing by the Rietveld method, a neutron diffraction pattern that is measured by the neutron diffraction method. When analyzing the neutron diffraction pattern by the Rietveld method, the layered rock salt-type structure, which is the crystal structure of the lithium transition metal complex oxide, can be used as the crystal structure.

When charging and discharging a secondary battery repeatedly, lithium is repeatedly intercalated into or desorbed from the region between the layers of the lithium transition metal complex oxide. However, when charging and discharging a secondary battery that uses an existing positive electrode active material repeatedly, there have been cases where an element other than lithium, deployed in a metal site (3a site), migrates irreversibly to a tetrahedral site (6c site).

In this regard, in the lithium transition metal complex oxide contained in the positive electrode active material of the present embodiment, the ratio by which an element other than lithium occupies the lithium site (3b site) is 3% or greater. By having an element other than lithium previously inserted in the lithium site in this way, it is considered possible to inhibit the element other than lithium from irreversibly migrating to the tetrahedral site (6c site) during charging and discharging. Therefore, it is considered possible to inhibit a change in the crystal structure of the lithium transition metal complex oxide due to repeated charging and discharging, and to improve the cycle characteristics.

In addition, due to the ratio by which an element other than lithium occupies the lithium site (3b site) being 8% or less, it is possible to inhibit deterioration of crystal perfection of the lithium transition metal complex oxide. Therefore, it is possible to secure a sufficient amount of lithium that contributes to charging and discharging, to reduce the reaction resistance, and to sufficiently enhance the battery capacity and the output.

### (1-3) Ratio by Which Lithium Element Occupies Metal Site (3a Site)

In the neutron diffraction crystal structure analysis of the lithium transition metal complex oxide having the layered rock salt-type structure, it is preferable that the ratio by which the lithium element occupies the metal site (3a site) is 3% or greater and 8% or less.

The lithium element inserted into the metal site (3a site) is derived from the lithium element replaced by the element other than lithium that is inserted into the lithium site (3b site). That is, the lithium element inserted into the metal site (3a site) is the lithium element that should originally be inserted in the lithium site (3b site).

The ratio by which the lithium element occupies the metal site (3a site) being 3% or greater and 8% or less means that the replaced lithium remains in the crystal structure, making it possible to inhibit the deterioration of the crystal perfection of the lithium transition metal complex oxide. Therefore, it is possible to reduce the reaction resistance, and to sufficiently enhance the battery capacity and the output.

### (1-4) Composition of Positive Electrode Active Material

The composition of the positive electrode active material according to the present embodiment is not particularly limited, yet is preferably represented by a general formula: kLi₃PO₄-(1-k)LiₛNi_{1-x-y-z}CoₓMn_{y}M_{z}O_{2+α}.

In the above general formula, it is preferable that k, x, y, z, s, and αsatisfy the following relationships: 0<k<0.1, 0≤x≤0.35, 0≤y≤0.35, 0≤z≤0.10, 1.00≤s<1.30, and 0≤α≤0.2. The element M in the above general formula may be at least one element selected from V, Mg, Mo, Nb, Ti, W, and Al.

In the above general formula, Li₃PO₄ corresponds to the lithium phosphate, and LiₛNi_{1-x-y-z}CoₓMn_{y}M_{z}O_{2+α} corresponds to the lithium transition metal complex oxide. As is apparent from the above general formula, it is preferable that the lithium phosphate is contained at a ratio by number of moles of greater than 0% by mole and less than 10% by mole, of the total of the lithium phosphate and the lithium transition metal complex oxide contained in the positive electrode active material.

Further, the lithium phosphate (Li₃PO₄) is preferably 10 wt% or less, and more preferably 5 wt% or less relative to the lithium transition metal complex oxide (LiₛNi_{1-x-y-z}CoₓMn_{y}M_{z}O_{2+α}).

The composition of the lithium transition metal complex oxide can be determined by a quantitative analysis by Inductively Coupled Plasma (ICP) optical emission spectrometry.

### (1-5) Average Particle Diameter of Primary Particles

In the positive electrode active material of the present embodiment, the average particle diameter of the primary particles is preferably 20 nm or greater and 250 nm or less, more preferably 20 nm or greater and 150 nm or less, and yet more preferably 70 nm or greater and 150 nm or less.

The average particle diameter of the primary particles of the positive electrode active material of the present embodiment being 20 nm or greater means that the primary particles contained in the positive electrode active material of the present embodiment and the crystallites constituting the primary particles can have been prepared to have a sufficiently large size. This makes it possible to also enhance the crystallinity of the lithium transition metal complex oxide contained in the positive electrode active material. Therefore, when applied to a secondary battery, the positive electrode active material of the present embodiment can enhance the battery capacity as well, resulting in a secondary battery having excellent battery capacity and cycle characteristics.

In the lithium transition metal complex oxide contained in the positive electrode active material of the present embodiment, as described above, an element other than Li is inserted in the Li site (3b site). As described above, when an element other than Li is inserted in the Li site, the diffusivity of Li during charging and discharging might be reduced. In this regard, by adjusting the average particle diameter of the primary particles of the positive electrode active material of the present embodiment to be 250 nm or less, it is possible to reduce the diffusion distance of Li. Therefore, it is possible to inhibit the reduction in the diffusivity of Li due to the insertion of an element other than Li in the Li site (3b site), and to improve the capacity and the output characteristics when the positive electrode active material is applied to a secondary battery.

The average particle diameter of the primary particles of the positive electrode active material is determined by selecting primary particles of the positive electrode active material, of which the whole bodies can be observed by a scanning electron microscope (SEM), and then measuring and averaging the major axis lengths of the selected primary particles. When calculating the average particle diameter of the primary particles, the number of primary particles to be evaluated is not particularly limited.

For example, when the positive electrode active material contains secondary particles, it is preferable to select 10 or more and 20 or less secondary particles, select primary particles from each of the selected secondary particles to select a total of 20 or more and 30 or less primary particles, and measure the major axis length of the selected primary particles.

When the positive electrode active material contains single primary particles which are not constituents of secondary particles, it is preferable to evaluate 5 or more primary particles of the positive electrode active material. The upper limit of the number of primary particles to be evaluated as described above is not particularly limited, yet, for example, it is preferable to evaluate 20 or less primary particles.

When the positive electrode active material contains only secondary particles, the above-specified number of secondary particles can be selected from among the secondary particles, and further, the above-specified number of primary particles in total can be selected from the respective secondary particles. Then, the major axis length of the selected primary particles may be measured, and the average value thereof can be used as the average particle diameter of the primary particles of the positive electrode active material.

When the positive electrode active material contains both secondary particles and single primary particles, the above-specified number of primary particles can be selected from the above-specified number of selected secondary particles and from the single primary particles. Then, the major axis length of all the selected primary particles may be measured, and the average value thereof can be used as the average particle diameter of the primary particles of the positive electrode active material.

By adjusting the average particle diameter of the primary particles of the positive electrode active material within the above range, it is possible to particularly enhance the battery capacity and the cycle characteristics of a secondary battery, and to even achieve both of them at a time, when the positive electrode active material is applied to the secondary battery.

### [Method for Manufacturing Positive Electrode Active Material for Lithium Ion Secondary Batteries]

A method for manufacturing a positive electrode active material for lithium ion secondary batteries is not particularly limited as long as a positive electrode active material having the above characteristics can be obtained. Hereinafter, an example of the method for manufacturing a positive electrode active material according to the present embodiment will be described.

Since the above-described positive electrode active material can be manufactured by the method for manufacturing a positive electrode active material according to the present embodiment as described above, descriptions of any already described matters will be partially omitted.

The method for manufacturing a positive electrode active material according to the present embodiment is a method for manufacturing a positive electrode active material for lithium ion secondary batteries containing secondary particles in which a plurality of primary particles are mutually agglomerated, and can be implemented according to, for example, a flow 10 shown in FIG. 1. That is, the method for manufacturing a positive electrode active material according to the present embodiment can include a mixing step (S1), a milling step (S2), and a thermal treatment step (S3).

In the mixing step (S1), a mixture can be prepared by mixing a lithium transition metal complex oxide having a layered rock salt-type structure with lithium phosphate.

In the milling step (S2), a milled product having an amorphous or low-crystallinity NiO-like rock salt-type structure can be obtained by applying mechanical stress to the mixture obtained in the mixing step (S1).

In the thermal treatment step (S3), the temperature of the milled product obtained in the milling step (S2) can be raised at a rate of 2°C/min or lower and can be thermally treated at a temperature of 620°C or higher and 700°C or lower.

Hereinafter, configuration examples of each step will be described.

### (1) Mixing Step (S1)

In the mixing step (S1), as described above, a mixture can be prepared by mixing the lithium transition metal complex oxide and lithium phosphate.

The lithium transition metal complex oxide to be used in the mixing step (S1) has a layered rock salt-type structure.

The composition of the lithium transition metal complex oxide is not particularly limited and can be selected in accordance with the target positive electrode active material. It is preferable that the lithium transition metal complex oxide is represented by, for example, a general formula: Li_{s'}Ni_{1-x'-y'-z'}Co_{x'}Mn_{y'}M_{z'}O_{2+β}.

In the above general formula, it is preferable that x', y', z', s' and β satisfy 0≤x'≤0.35, 0≤y'≤0.35, 0≤z'≤0.10, 1.00≤s'<1.30, and 0≤β≤0.2. The element M is preferably at least one element selected from V, Mg, Mo, Nb, Ti, W, and Al.

Lithium phosphate can be represented by Li₃PO₄.

In the mixing step (S1), the method for mixing the lithium transition metal complex oxide and the lithium phosphate is not particularly limited, and they can be mixed, for example, in a mortar.

In the mixing step (S1), the ratio at which the lithium transition metal complex oxide and the lithium phosphate are mixed is not particularly limited. Yet, it is preferable to mix them such that the content ratio of the lithium phosphate in the resulting mixture satisfies the intended composition. Therefore, for example, in the mixing step, it is preferable to mix the lithium transition metal complex oxide and the lithium phosphate such that the ratio by number of moles of the lithium phosphate is greater than 0% by mole and less than 10% by mole relative to the total of the lithium phosphate and the lithium transition metal complex oxide contained in the resulting mixture.

### (2) Milling Step

In the milling step (S2), mechanical stress is applied to the mixture obtained in the mixing step (S1). By applying mechanical stress to the mixture, it is possible to process the lithium transition metal complex oxide having a layered rock salt-type structure and the lithium phosphate into a milled product having an amorphous or low-crystallinity NiO-like rock salt-type structure.

The method for applying mechanical stress is not particularly limited. Yet, it is preferable to use mechanical milling. By using mechanical milling, it becomes easier to process the lithium transition metal complex oxide having a crystal structure of a layered rock salt-type structure and lithium phosphate into an amorphous or low-crystallinity NiO-like rock salt-type structure.

The amorphous or low-crystallinity NiO-like rock salt-type structure means a state in which the half-value width of a diffraction peak of the (200) plane of the milled product obtained in the milling step, observed at 44° to 45° in an XRD pattern after being subjected to background processing and the like, is 0.5° or greater.

### (3) Thermal Treatment Step

In the thermal treatment step (S3), the milled product having the amorphous or low-crystallinity NiO-like rock salt-type structure obtained in the milling step (S2) can be thermally treated. By performing the thermal treatment step, it is possible to obtain a lithium transition metal complex oxide having a layered rock salt-type structure in which the lithium phosphate has crystallized and dispersed. In addition, by performing the milling step in combination with the thermal treatment step, it is possible to adjust the ratio by which an element other than lithium occupies the Li site (3b site) to be within the desired range easily.

In the thermal treatment step (S3), only the lithium transition metal complex oxide becomes a layered rock salt-type structure, and the lithium phosphate does not become a layered rock salt-type structure.

By performing the thermal treatment step (S3), it is possible to coat the surfaces of the primary particles of the lithium transition metal complex oxide having a layered rock salt-type structure with the crystallized lithium phosphate, and to disperse the crystallized lithium phosphate in the secondary particles of the lithium transition metal complex oxide having a layered rock salt-type structure or on the surfaces of the secondary particles of the lithium transition metal complex oxide having a layered rock salt-type structure. The lithium phosphate can be formed into, for example, a minute crystal.

### (Thermal Treatment Temperature)

In the thermal treatment step (S3), it is preferable to perform the thermal treatment at a temperature (thermal treatment temperature) of 620°C or higher and 700°C or lower, and more preferably at a temperature of 620°C or higher and 680°C or lower. By performing the thermal treatment in the above temperature range, it becomes easier to coat the surfaces of the primary particles of the lithium transition metal complex oxide having a layered rock salt-type structure with the crystallized lithium phosphate, and to disperse the crystallized lithium phosphate in the secondary particles of the lithium transition metal complex oxide having a layered rock salt-type structure or on the surfaces of the secondary particles of the lithium transition metal complex oxide having a layered rock salt-type structure.

In the thermal treatment step (S3), it is preferable to raise the temperature to the thermal treatment temperature specified above at a rate (temperature raising rate) of 2°C/min or lower, and more preferably at 0.1°C/min or higher and 1°C/min or lower.

By adjusting the temperature raising rate to 2°C/minute or lower, it is possible to cause the reaction in the milled product to proceed uniformly, and to promote the crystal growth of the lithium transition metal complex oxide.

The retention time at the thermal treatment temperature is not particularly limited, yet is preferably 10 hours or longer, and more preferably 10 hours or longer and 48 hours or shorter.

In the thermal treatment step, for example, after the temperature is raised to the thermal treatment temperature specified above, the milled product can be retained at the temperature for a predetermined time, and then cooled to room temperature.

### (Atmosphere)

The thermal treatment atmosphere is preferably an oxidizing atmosphere. It is preferable that the oxidizing atmosphere has an oxygen concentration of 80% by volume or higher, and more preferably an oxygen concentration of 85% by volume or higher. The oxidizing atmosphere may be an oxygen atmosphere. Therefore, the oxygen concentration may be 100% by volume or lower.

The method for manufacturing a positive electrode active material of the present embodiment may further include optional steps as required. For example, the method may further include a lithium transition metal complex oxide manufacturing step of preparing a lithium transition metal complex oxide to be used in the above-described mixing step.

### (4) Lithium Transition Metal Complex Oxide Manufacturing Step

The lithium transition metal complex oxide manufacturing step may include, for example, a complex hydroxide manufacturing step, a heating step, and a firing step described below. The lithium transition metal complex oxide manufacturing step may include only one of the above-described steps.

### (4-1) Complex Hydroxide Manufacturing Step

The complex hydroxide manufacturing step is a step of obtaining a complex hydroxide as a coprecipitate in a reaction aqueous solution obtained by mixing a mixed aqueous solution containing a metal salt with an alkaline aqueous solution.

The mixed aqueous solution may contain, as the metal salt, a metal salt of a metal other than lithium contained in the lithium transition metal complex oxide. The mixed aqueous solution may contain, for example, a nickel salt, such as nickel (II) sulfate and the like, a cobalt salt, such as cobalt (II) sulfate and the like, a manganese salt, such as manganese (II) sulfate and the like, or a metal salt of element M as the metal salt. Examples of the element M used as the metal salt of the element M include at least one element selected from the group consisting of V, Mg, Mo, Nb, Ti, W, and Al.

The mixed aqueous solution can contain each metal salt at a ratio suited to the intended composition of the lithium transition metal complex oxide.

The mixed aqueous solution containing the metal salt can form the reaction aqueous solution by being supplied into a reactor together with the alkaline aqueous solution, and the complex hydroxide can be obtained as a coprecipitate from the reaction aqueous solution. When a complex hydroxide containing a plurality of types of metals is needed, it is necessary to supply a plurality of types of metal salts as the mixed aqueous solution containing the metal salt to form the reaction aqueous solution. Here, for example, a mixed aqueous solution may be prepared and supplied per metal salt. In addition, one, two, or more mixed aqueous solutions containing a plurality of types of metal salts may be prepared and supplied.

The alkaline aqueous solution is not particularly limited. Yet, for example, an aqueous solution of an alkali metal hydroxide, such as sodium hydroxide, potassium hydroxide, and the like, may be used.

A complexing agent may be added to the reaction aqueous solution as necessary. As the complexing agent, for example, one or more types selected from ammonia water, aqueous solutions of ammonium sulfate, ammonium chloride, and the like may be used.

The complex hydroxide can be obtained by mixing the mixed aqueous solution and the alkaline aqueous solution to form the reaction aqueous solution and controlling the pH value of the reaction aqueous solution. Here, the pH value of the reaction aqueous solution is not particularly limited. Yet, it is preferable to control the pH value to be, for example, alkaline.

When no complexing agent is added to the reaction aqueous solution, it is preferable to control the pH value of the reaction aqueous solution to be 9 or higher and 11 or lower. Here, it is preferable to adjust the temperature of the reaction aqueous solution to be in the range of 40°C or higher and 80°C or lower. Adjusting the pH value and the temperature of the reaction aqueous solution to be in the above ranges makes it possible to adjust the reaction rate to be in an appropriate range, and to bring the solubility of ions of metals, such as nickel and the like, to a preferable degree, which makes it possible to avoid formation of minute particles due to crystallization.

Specifically, by adjusting the pH value of the reaction aqueous solution to be 11 or lower, it is possible to inhibit formation of minute particles, and to facilitate formation of spherical particles. Therefore, when filtering the complex hydroxide to be obtained, the filterability can be improved. By adjusting the pH value of the reaction aqueous solution to be 9 or higher, it is possible to adjust the formation rate of the complex hydroxide to a suitable rate, and to facilitate formation of the complex hydroxide having the intended composition.

Further, by adjusting the temperature of the reaction aqueous solution to be 40°C or higher, it is possible to adjust the reaction rate to a suitable rate. By adjusting the temperature of the reaction aqueous solution to be 80°C or lower, it is possible to restrict the amount of water evaporation, and to inhibit an increase in the slurry concentration. Therefore, it is possible to obtain the complex hydroxide having the intended composition easily.

As described above, a complexing agent can be added to the reaction aqueous solution. It is possible to increase the solubility of metals, such as nickel and the like, by adding a complexing agent to the reaction aqueous solution.

When using a complexing agent, it is preferable to control the pH value of the reaction aqueous solution to be 10 or higher and 12.5 or lower. Here, it is preferable to adjust the temperature of the reaction aqueous solution to be in the range of 40°C or higher and 60°C or lower.

The concentration of the complexing agent in the reaction aqueous solution is not particularly limited. Yet, it is preferable to maintain the concentration of the complexing agent at a constant value in a range of 3 g/L or higher and 25 g/L or lower. By adjusting the concentration of the complexing agent to be 3 g/L or higher, it is possible to inhibit fluctuation in the solubility of metal ions in the reaction aqueous solution. Therefore, it is possible to form a complex hydroxide having a uniform shape and a uniform particle diameter, and to restrict the width of the particle size distribution.

In addition, by adjusting the concentration of the complexing agent in the reaction aqueous solution to be 25 g/L or lower, it is possible to adjust the solubility of metal ions to be in a particularly suitable range, and to obtain the complex hydroxide having the intended composition easily.

When the complexing agent concentration in the reaction aqueous solution fluctuates, the solubility of metal ions fluctuates. Therefore, it is preferable to maintain the complexing agent concentration at a constant value. For example, it is preferable to maintain the complexing agent concentration at a desired concentration while allowing a range of approximately 5 g/L or lower between the upper limit and the lower limit. Since ammonia water and the like can be used as the complexing agent as described above, the complexing agent concentration can also be referred to as an ammonia concentration.

### (4-2) Heating Step

The heating step is a step of heating the complex hydroxide manufactured in the complex hydroxide manufacturing step, and can be performed as needed. Water contained in the complex hydroxide can be removed by the heating step. By performing this heating step, it is possible to reduce water which might remain until the firing step. In addition, depending on the conditions of the heating step, it is possible to convert the complex hydroxide to a complex oxide. By performing the heating step, it is possible to prevent the variations in the ratio between the number of metal atoms and the number of lithium atoms in the lithium transition metal complex oxide and positive electrode active material to be manufactured.

In the heating step, it is sufficient if the water can be removed to such an extent that no variation would occur in the ratio between the number of metal atoms and the number of lithium atoms in the lithium transition metal complex oxide and the like. Therefore, it is not absolutely necessary to convert the entirety of the complex hydroxide to the complex oxide. When performing the heating step, it is sufficient if the complex hydroxide is heated to a temperature at which the residual water is removed in the heating step. Therefore, the heating temperature is not particularly limited, yet is preferably 105°C or higher and 800°C or lower. By heating the complex hydroxide to 105°C or higher, it is possible to remove the residual water in a short time. If the temperature is lower than 105°C, it tends to take a long time to remove the residual water. Therefore, it is preferable to heat the complex hydroxide at 105°C or higher as described above. Further, by setting the heating temperature to be 800°C or lower, it is possible to prevent the particles converted to the complex oxide from being sintered and agglomerated.

The atmosphere in which the heating treatment is performed is not particularly limited. Yet, it is preferable to perform the heating treatment in an air stream under which it is easy to perform the heating treatment.

### (4-3) Firing Step

In the firing step, a lithium mixture obtained by mixing the heated product obtained in the heating step with one or more types selected from lithium and lithium compounds can be fired. Instead of the heated product, the complex hydroxide prepared in the complex hydroxide manufacturing step can be used as is. The lithium transition metal complex oxide having a layered rock salt-type structure can be obtained by the firing step.

The ratio (Li/Me) between the number of atoms (Me) of a metal element other than lithium and the number of atoms (Li) of the lithium element in the lithium mixture is preferably 1.00 or greater and less than 1.30. That is, it is preferable to perform mixing such that Li/Me in the lithium mixture becomes equal to Li/Me in the lithium transition metal complex oxide as the product. This is because Li/Me does not change from before the firing step to after the firing step, so Li/Me in the lithium mixture becomes equal to Li/Me in the lithium transition metal complex oxide. The Me denoted above means the sum of the numbers of atoms of metal elements other than lithium in the lithium mixture or the lithium transition metal complex oxide, and examples of this sum include the sum of the numbers of atoms of nickel, cobalt, manganese, and the element M.

The lithium compound to be used when preparing the lithium mixture is not particularly limited. Yet, it is preferable to use, for example, one or more types selected from a lithium compound group consisting of lithium hydroxide, lithium nitrate, and lithium carbonate, from the viewpoint of easy availability. As the lithium compound to be used when preparing the lithium mixture, a mixture of two or more types selected from the above-specified lithium compound group can also be used.

As the lithium compound, it is more preferable to use lithium hydroxide, considering particularly the ease of handling and stability of quality.

It is preferable to sufficiently mix the lithium mixture before being fired in the firing step. By sufficiently mixing the lithium mixture before firing, it is possible to eliminate Li/Me variations between individual particles, and to obtain particularly high battery characteristics.

In the firing step, it is possible to obtain a lithium transition metal complex oxide by firing the lithium mixture. When the lithium mixture is fired in the firing step, lithium in the substances containing lithium diffuses into the complex hydroxide or the like obtained in the complex hydroxide manufacturing step or the heating step, resulting in formation of the lithium transition metal complex oxide having a layered rock salt-type structure.

It is preferable to fire the lithium mixture at 600°C or higher and 850°C or lower, and more preferably at 650°C or higher and 820°C or lower. By setting the firing temperature to 600°C or higher, it is possible to sufficiently diffuse lithium into the complex hydroxide or the like, and to enhance the crystallinity of the lithium transition metal complex oxide to be obtained. Further, by setting the firing temperature to 850°C or lower, it is possible to inhibit particles of the lithium transition metal complex oxide to be obtained from being sintered, and to inhibit occurrence of abnormal grain growth. Therefore, it is possible to inhibit coarsening of particles of the lithium transition metal complex oxide to be obtained after the firing.

The firing time is not particularly limited as well. Yet, it is preferable to set the firing time to at least 3 hours or longer, and more preferably to 6 hours or longer and 24 hours or shorter.

The atmosphere during the firing is preferably an oxidizing atmosphere, and more preferably an atmosphere having an oxygen concentration of 18% by volume or higher and 100% by volume or lower. It is preferable to perform the firing step in the open air or in an oxygen airflow. By setting the oxygen concentration in the firing atmosphere to be 18% by volume or higher, for example, it is possible to sufficiently oxidize the complex hydroxide or the like, even if there is some in the particles, and to enhance the crystallinity of the lithium transition metal complex oxide. In particular, considering the battery characteristics, it is preferable to perform the firing in an oxygen airflow.

### [Lithium Ion Secondary Battery]

A lithium ion secondary battery of the present embodiment includes at least a positive electrode, a negative electrode, and a nonaqueous electrolyte, and the positive electrode may contain the positive electrode active material for lithium ion secondary batteries described above.

Hereinafter, one configuration example of the secondary battery of the present embodiment will be described for each component. The secondary battery of the present embodiment includes, for example, the positive electrode, the negative electrode, and the nonaqueous electrolyte, and is composed of the same components as those of a common lithium ion secondary battery. Note that the embodiment described below is a mere example, and the lithium ion secondary battery of the present embodiment may be implemented based on not only the following embodiment, but with various modifications and improvements based on the knowledge of a person skilled in the art. The use of the secondary battery is not particularly limited, either.

### (Positive Electrode)

The positive electrode of the secondary battery of the present embodiment may contain the above-described positive electrode active material.

An example of the method for manufacturing the positive electrode will be described below. First, the above-described positive electrode active material (powder form), a conductive agent, and a binding agent (binder) are mixed to form a positive electrode mixture material, and further, if necessary, activated carbon, as well as a solvent for viscosity modification or the like are added. A positive electrode mixture material paste can be prepared by kneading the mixture of these materials.

Since the mixing ratio of the respective materials in the positive electrode mixture material is a factor that determines the performance of the lithium ion secondary battery, the mixing ratio can be adjusted according to the application. The mixing ratio of the materials can be the same as that in a positive electrode of a publicly-known lithium ion secondary battery. For example, when the total mass of solids of the positive electrode mixture material excluding the solvent is regarded to be 100% by mass, the positive electrode active material can be contained at a ratio of 60% by mass or greater and 95% by mass or less, the conductive agent can be contained at a ratio of 1% by mass or greater and 20% by mass or less, and the binding agent can be contained at a ratio of 1% by mass or greater and 20% by mass or less.

The positive electrode mixture material paste thus obtained is applied to the surface of, for example, a current collector composed of aluminum foil, dried to remove the solvent, to prepare a sheet-like positive electrode. If necessary, the sheet-like positive electrode can be pressurized by a roll press or the like to increase the electrode density. The sheet-like positive electrode thus obtained can be subjected to cutting and like to have an appropriate size suited to the intended battery, and used for manufacturing a battery.

As the conductive agent, for example, graphite (natural graphite, artificial graphite, expanded graphite, and the like), a carbon black-based material (acetylene black, Ketjen black (registered trademark), and the like), and the like can be used.

The binding agent (binder) serves to join the particles of the positive electrode active material together. One or more types selected from polyvinylidene fluoride (PVDF), polytetrafluoroethylene (PTFE), fluororubber, ethylene-propylene-diene rubber, styrene-butadiene, cellulose-based resin, polyacrylic acid, and the like can be used.

If necessary, a solvent in which the positive electrode active material, the conductive agent, and the like are dispersible, and the binder is soluble, can be added to the positive electrode mixture material. Specifically, an organic solvent, such as N-methyl-2-pyrrolidone and the like, can be used as the solvent. Activated carbon can also be added to the positive electrode mixture material to increase the capacity of the electric double layer.

The method for manufacturing the positive electrode is not limited to the above-described example, and other methods may be used. For example, the positive electrode can be manufactured by press-molding the positive electrode mixture material and then drying the product under a vacuum atmosphere.

### (Negative Electrode)

For the negative electrode, metal lithium, a lithium alloy, and the like can be used. Further, as the negative electrode, it is possible to use one that is obtained by mixing a binding agent with a negative electrode active material that can occlude and desorb lithium ions, adding an appropriate solvent to the mixture to obtain a negative electrode mixture material in the form of a paste, applying the paste to the surface of a metal foil current collector, such as copper and the like, drying the paste, and if necessary, compressing the resulting product to increase the electrode density.

As the negative electrode active material, for example, natural graphite, artificial graphite, a fired product of an organic compound, such as a phenolic resin and the like, and a powder of a carbon material, such as coke and the like, can be used. In this case, as the negative electrode binder, a fluorine-containing resin, such as PVDF and the like, can be used as in the positive electrode. As the solvent in which the active material and the binding agent are dispersible, an organic solvent, such as N-methyl-2-pyrrolidone and the like, can be used.

### (Separator)

A separator can be interposed between the positive electrode and the negative electrode as needed. The separator separates the positive electrode and the negative electrode from each other and supports the electrolyte. Any publicly-known separator can be used. For example, a thin membrane that is composed of polyethylene, polypropylene, and the like, and has a multitude of minute pores can be used.

### (Nonaqueous Electrolyte)

As the nonaqueous electrolyte, for example, a nonaqueous electrolytic solution can be used.

As the nonaqueous electrolytic solution, for example, a solution obtained by dissolving a lithium salt as a support salt in an organic solvent can be used. Further, as the nonaqueous electrolytic solution, a solution obtained by dissolving a lithium salt in an ionic liquid can be used. The ionic liquid refers to a salt composed of cations and anions other than lithium ions and having a liquid state even at normal temperature.

As the organic solvent, one type selected from cyclic carbonates (ethylene carbonate, propylene carbonate, butylene carbonate, trifluoropropylene carbonate, and the like), chain carbonates (diethyl carbonate, dimethyl carbonate, ethyl methyl carbonate, dipropyl carbonate, and the like), ether compounds (tetrahydrofuran, 2-methyl tetrahydrofuran, dimethoxyethane, and the like), sulfur compounds (ethyl methyl sulfone, butane sultone, and the like), phosphorus compounds (triethyl phosphate, trioctyl phosphate, and the like), and the like can be used alone, or two or more types of them can be used as a mixture.

As the supporting salt, LiPF₆, LiBF₄, LiClO₄, LiAsF₆, LiN(CF₃SO₂)₂, their complex salts, and the like can be used. Further, the nonaqueous electrolytic solution may contain a radical scavenger, a surfactant, a flame retardant, and the like.

The nonaqueous electrolyte may be a solid electrolyte. The solid electrolyte has properties that can withstand a high voltage. Examples of the solid electrolyte include an inorganic solid electrolyte and an organic solid electrolyte.

Examples of the inorganic solid electrolyte include an oxide-based solid electrolyte, a sulfide-based solid electrolyte, and the like.

The oxide-based solid electrolyte is not particularly limited, and, for example, it is preferable to use an oxide-based solid electrolyte containing oxygen (O) and having lithium ion conductivity and an electron insulating property. As the oxide-based solid electrolyte, for example, one or more types selected from lithium phosphate (Li₃PO₄), Li₃PO₄N_{X}, LiBO₂N_{X}, LiNbO₃, LiTaO₃, Li₂SiO₃, Li₄SiO₄-Li₃PO₄, Li₄SiO₄-Li₃VO₄, Li₂O-B₂O₃-P₂O₅, Li₂O-SiO₂, Li₂OB₂O₃-ZnO, Li_{1+X}Al_{X}Ti_{2-X}(PO₄)₃ (0≤X≤1), Li_{1+X}Al_{X}Ge_{2-X}(PO₄)₃ (0≤X≤1), LiTi₂(PO₄)₃, Li_{3X}La_{2/3-X}TiO₃ (0≤X≤2/3), Li₅La₃Ta₂O₁₂, Li₇La₃Zr₂O₁₂, Li₆BaLa₂Ta₂O₁₂, Li_{3.6}Si_{0.6}P_{0.4}O₄, and the like can be used.

The sulfide-based solid electrolyte is not particularly limited, and for example, it is preferable to use a sulfide-based solid electrolyte containing sulfur (S) and having lithium ion conductivity and an electron insulation property. As the sulfide-based solid electrolyte, for example, one or more types selected from Li₂S-P₂S₅, Li₂S-SiS₂, LiI-Li₂S-SiS₂, Lil-Li₂S-P₂S₅, Lil-Li₂S-B₂S₃, Li₃PO₄-Li₂S-Si₂S, Li₃PO₄-Li₂S-SiS₂, LiPO₄-Li₂S-SiS, Lil-Li₂S-P₂O₅, Lil-Li₃PO₄-P₂S₅, and the like can be used.

As the inorganic solid electrolyte, any inorganic solid electrolytes other than those above, such as Li₃N, LiI, Li₃N-LiI-LiOH, and the like may be used.

The organic solid electrolyte is not particularly limited as long as it is a polymeric compound exhibiting ion conductivity, and for example, polyethylene oxide, polypropylene oxide, copolymers thereof, and the like may be used. Further, the organic solid electrolyte may contain a supporting salt (lithium salt).

### (Shape and Configuration of Lithium Ion Secondary Battery)

The lithium ion secondary battery of the present embodiment described above can have various shapes, such as a cylindrical shape, a laminated shape, and the like. Regardless of the shape, when the secondary battery of the present embodiment uses a nonaqueous electrolytic solution as the nonaqueous electrolyte, the secondary battery may have a structure obtained by laminating the positive electrode and the negative electrode via the separator to form an electrode element, impregnating the obtained electrode element with the nonaqueous electrolytic solution, connecting a positive electrode current collector with a positive electrode terminal leading to the outside, and a negative electrode current collector with a negative electrode terminal leading to the outside by leads for current collection, and the like, and tightly sealing the resulting product in a battery case.

As described above, the secondary battery of the present embodiment is not limited to the form using a nonaqueous electrolytic solution as the nonaqueous electrolyte, and may be a secondary battery using a solid nonaqueous electrolyte, i.e., an all-solid-state battery. In the case of an all-solid-state battery, any configurational particulars other than the positive electrode active material can be changed as needed.

The secondary battery of the present embodiment can be used for various applications. Since the secondary battery of the present embodiment can become a secondary battery having a high capacity and a high output, it is suitable as the power source of, for example, a small-sized portable electronic device (such as a laptop personal computer, a portable telephone terminal, and the like) that are required to constantly have a high capacity, and is also suitable as the power source for an electric vehicle that is required to exhibit a high output.

Further, since the secondary battery of the present embodiment can be reduced in size and exhibit a high output, it is suitable as the power source of an electric vehicle that has limited mounting space. Note that the secondary battery of the present embodiment can be used not only as the power source of an electric vehicle that is driven purely by electric energy, but also as the power source of what is generally referred to as a hybrid vehicle that uses electric energy with a combustion engine, such as a gasoline engine, a diesel engine, and the like in combination.

### Examples

The present invention will be described in more detail below by way of Examples, but the present invention should not be construed as being limited to these Examples.

Here, first, a method for evaluating a positive electrode active material and a secondary battery obtained in the following Examples and Comparative Examples will be described.

### (Evaluation of Positive Electrode Active Material)

A positive electrode active material obtained was evaluated as follows.

### (a) Evaluation of Composition

The composition of the positive electrode active material was analyzed by ICP emission spectrometry. The evaluation result is shown in the "Composition" field of Table 1. The ratio of the lithium phosphate shown in the "Composition" field means the mass ratio relative to the lithium transition metal complex oxide.

### (b) Ratio by Which Element Other Than Lithium Occupies Lithium Site (3b Site) and Ratio by Which Lithium Occupies Metal Site (3a Site)

A vanadium tube was filled with approximately 2 g of the positive electrode active material prepared in each of the following Examples and Comparative Examples, and then sealed completely. Neutron diffraction measurement was performed at BL20 (Ibaraki Prefecture Material Structure Analysis Instrument, iMATERIA) of the Japan Proton Accelerator Research Complex (J-PARC) under the condition that an intensity of 10,000 cps or higher would be obtained in the double-frame mode.

A Rietveld analysis was performed on the neutron diffraction pattern obtained at the rear detector bank, using analysis software Z-Code. Here, R-3m was set as the space group, and lithium and a mixed metal element (a metal element other than lithium in the lithium seat) were set as chemical species at the 3b site, and a metal element other than lithium and mixed lithium were set as chemical species at the 3a site. The metal element other than lithium means nickel, cobalt, manganese, and the element M, any of which was selected and set according to the composition of each Example. The metal element other than lithium was nickel in Examples 1 to 4 and Comparative Examples 1 and 2. The metal element other than lithium was nickel, cobalt, and aluminum in Example 5, and nickel, manganese, and cobalt in Example 6.

After refining the scale factor, the lattice constants, and the global parameter, the seat occupancy and the atomic coordinates were refined. The atomic displacement parameter was fixed in the range of 0.9 to 1.0 Å² for lithium, 0.3 to 0.5 Å² for nickel, cobalt, manganese, and the element M, and 0.6 to 0.8 Å² for oxygen. After refining the seat occupancy and the atomic coordinates, the reliability parameter S value was regarded as converging when it became 3.0 or less. The seat occupancy of any metal element other than lithium in the obtained lithium site (3b site) was calculated, and shown in the "Ratio by which element other than Li occupies Li site (3b site)" field in Table 1. The seat occupancy of the lithium element in the obtained metal site (3a site) was calculated, and shown in the "Ratio by which Li element occupies metal site (3a site)" in Table 1.

Powder neutron diffraction measurement can also be performed using the High Resolution Powder Diffractometer (HRPD) installed on the nuclear reactor JRR-3 of Japan Atomic Energy Agency, Super HRPD of J-PARC, and the like.

### (c) Average Particle Diameter of Primary Particles

In a SEM observation image of the lithium transition metal complex oxide particles, 15 secondary particles, of which the whole bodies could be observed by image analysis were selected, and primary particles were selected from each of the selected secondary particles. Here, a total of 30 primary particles were selected. The major axis lengths of the selected primary particles were measured, and the average value was determined as the average primary particle diameter.

The evaluation result is shown in the "Average particle diameter of primary particles" field in Table 1.

### (Manufacture and Evaluation of Lithium Ion Secondary Battery)

### (a) Manufacture of Coin-Type Battery

A coin-type battery was manufactured, using the positive electrode active material prepared in the following Examples and Comparative Examples.

Specifically, 0.170 g of the positive electrode active material obtained in the following Examples and Comparative Examples was weighed out in a glove box in an argon atmosphere. Then, the weighed-out positive electrode active material was put in a container together with 0.010 g of acetylene black, 0.250 g of a polyvinylidene fluoride (PVDF) solution (8% solution obtained from Kureha Corporation), and 70 µL of N-methyl-2-pyrrolidone (NMP), and mixed using a stirrer (AR-100 obtained from Thinky Corporation).

The slurry obtained by the stirring was applied to an aluminum foil, vacuum-dried at normal temperature for 2 hours, and then vacuum-dried at 120°C for 2 hours. In this way, an electrode was obtained.

The obtained electrode was punched to have a diameter of 10 mm, and used as a positive electrode after weight measurement.

Lithium metal was used as a negative electrode, and a polyethylene (PE) porous film was used as a separator. The positive electrode, the separator, and the negative electrode were laminated in this order. The laminate of the positive electrode, the separator, and the negative electrode was impregnated with an electrolytic solution, and sealed between a positive electrode can and a negative electrode can. A gasket was provided between the positive electrode can and the negative electrode can, to restrict their relative movement and fix them in order to maintain both of the members in a contactless state, i.e. in an electrically insulated state.

As the electrolytic solution, a 3:7 mixture liquid of ethylene carbonate (EC) and diethyl carbonate (DEC) (ratio by volume) containing 1 M of LiPF₆ as the supporting electrolyte was used.

The coin-type battery was manufactured in a dry room controlled at a dew point of -60°C.

### (b) Evaluation of Discharge Capacity and Cycle Characteristics

The capacity retention rate, which indicates the cycle characteristics, was evaluated by measuring the capacity retention rate of the coin-type battery through 100 cycles of charging/discharging.

Specifically, the coin-type battery was charged to a cutoff voltage of 4.5 V by flowing a current of 30 mA/g through the battery, and then was discharged to a cutoff voltage of 2.5 V. This cycle was repeated for 100 cycles. Then, the capacity retention rate, which is the ratio of the discharge capacity at the hundredth cycle after the conditioning to the discharge capacity at the first cycle, was calculated and evaluated.

The discharge capacity at the first cycle is shown in the "Discharge capacity" field in Table 1, and the capacity retention rate is shown in the "Cycle characteristics" field in Table 1.

### (Conditions for Manufacturing Positive Electrode Active Material)

### [Example 1]

### (1) Lithium Transition Metal Complex Oxide Manufacturing Step

Nickel hydroxide obtained by a publicly-known method was mixed with lithium hydroxide monohydrate, to prepare a lithium mixture.

Nickel hydroxide and lithium hydroxide monohydrate were sufficiently mixed using a shaker mixer apparatus (TURBULA Type T2C, obtained from Willy A. Bachofen (WAB)), to prepare a lithium mixture.

The respective raw materials were weighed out and mixed such that the ratio (Li/Ni) by number of atoms of the lithium atoms (Li) to the nickel atoms (Ni) in the lithium mixture to be obtained would be 1.00.

The lithium mixture was fired in an oxygen atmosphere (firing step).

In the firing step, the lithium mixture was heated to 650°C, which was the firing temperature, and then retained at 650°C, which was the firing temperature, for 12 hours. After being retained at the firing temperature, the lithium mixture was cooled to room temperature.

An XRD pattern of the lithium transition metal complex oxide obtained from the firing was measured using a powder X-ray diffractometer (obtained from Bruker AXS., product name: D2 PHASER). As a result, it was confirmed that the lithium transition metal complex oxide had a layered rock salt-type structure.

### (2) Mixing Step

In the mixing step, 0.97 g of the lithium transition metal complex oxide having the layered rock salt-type structure and 0.03 g of lithium phosphate were weighed out using an electronic balance in a glove box in an argon atmosphere, and mixed sufficiently in an agate mortar, to prepare a mixture.

### (3) Milling Step

In the milling step, a zirconia container having a volume of 40 mL was filled with the mixture obtained in the mixing step together with 59 g of φ5-mm zirconia balls in the glove box mentioned above.

Using a planetary ball mill (P-7) obtained from Fritsch Japan Co., Ltd., a mechanical milling process for operating the ball mill at 600 rpm×15 min, and then stopping the ball mill for 3 min was performed 96 times in total.

Then, the zirconia container was opened in the glove box in the argon atmosphere, and the milled product obtained from the mechanical milling process was extracted by removing the zirconia balls.

Using a powder X-ray diffractometer (D2 PHASER obtained from Bruker AXS.), an XRD pattern of the milled product was measured using CuKα rays in a 20 region of 10° or greater and 100° or less under the conditions that a tube voltage was 30 V and a tube current was 10 mA. As a result, the half-value width of a diffraction peak of the (200) plane observed at 44° to 45° was 0.5° or greater, and a broad diffraction peak attributable to an NiO-like rock salt-type structure was observed. Therefore, it was confirmed that the milled product had an amorphous or low-crystallinity NiO-like rock salt-type structure.

### (4) Thermal Treatment Step

The temperature of the milled product obtained in the milling step was raised to 650°C, which was the thermal treatment temperature, in a firing furnace in an oxygen atmosphere at a temperature raising rate of 1°C/min, and the milled product was thermally treated by being retained at the thermal treatment temperature for 12 hours, to obtain a positive electrode active material.

The obtained positive electrode active material was embedded in a thermosetting resin and then polished using a cross-section polisher (SM-09010 obtained from JEOL Ltd.). A hundred particles in the obtained particle cross-section were observed using a Schottky field emission scanning electron microscope (obtained from Carl Zeiss Co., Ltd., Ultra 55). As a result, it was confirmed that the positive electrode active material was composed of secondary particles in which a plurality of primary particles were agglomerated with each other.

The positive electrode active materials of the following Examples 2 to 6 were evaluated by the same procedure. As a result, it was confirmed that the obtained positive electrode active materials were composed of secondary particles in which a plurality of primary particles were agglomerated with each other.

In order to confirm the crystal structure of the obtained positive electrode active material, an XRD pattern was measured using a powder X-ray diffractometer. As a result, it was confirmed that the lithium transition metal complex oxide had a layered rock salt-type structure. Moreover, judging from the fact that a diffraction peak of the lithium phosphate was weakly confirmed, it was confirmed that crystallized lithium phosphate was dispersed on the submicron order.

The positive electrode active materials of the following Examples 2 to 6 were also evaluated by the same procedure. As a result, it was confirmed that the lithium transition metal complex oxides had a layered rock salt-type structure. Judging from the fact that a diffraction peak of the lithium phosphate was weakly confirmed in the following Examples 2 to 6 as well, and it was confirmed that the crystallized lithium phosphate was dispersed on the submicron order.

The obtained positive electrode active material was observed using SEM-EDS (obtained from JEOL Ltd., product name: JCM-6000), to obtain an element mapping image. As a result, phosphorus was dispersed on the submicron order, and judging from the distribution of the phosphorus, it was confirmed that at least a part of the surfaces of the primary particles of the lithium transition metal complex oxide was coated with the lithium phosphate, and that the lithium phosphate was dispersed in the secondary particles of the lithium transition metal complex oxide or on the surfaces of the secondary particles of the lithium transition metal complex oxide.

Also the positive electrode active materials of the following Examples 2 to 6 were observed using SEM-EDS by the same procedure. As a result, phosphorus was dispersed on the submicron order, and judging form the distribution of the phosphorus, it was confirmed that at least a part of the surfaces of the primary particles of the lithium transition metal complex oxide was coated with the lithium phosphate, and that the lithium phosphate was dispersed in the secondary particles of the lithium transition metal complex oxide or on the surfaces of the secondary particles of the lithium transition metal complex oxide.

The results of other evaluations are shown in Table 1.

The composition of the obtained positive electrode active material was LiNiO₂-3%Li₃PO₄ when expressed by ratio by mass as shown in Table 1, and 0.975LiNiO₂-0.025Li₃PO₄ when expressed by ratio by number of moles.

Using the obtained positive electrode active material, a coin-type battery as described above was manufactured and evaluated. Evaluation results are shown in Table 1.

### [Example 2 and Example 3]

Positive electrode active materials and coin-type batteries were manufactured under the same conditions as in Example 1 except that the thermal treatment temperature in the thermal treatment step was changed, and then evaluated.

The thermal treatment temperature was 665°C in Example 2, and 635°C in Example 3.

The evaluation results are shown in Table 1.

### [Example 4]

In the mixing step, 0.92 g of the lithium transition metal complex oxide prepared in Example 1 and 0.08 g of lithium phosphate were weighed out using an electronic balance, and mixed sufficiently in an agate mortar to prepare a mixture, which was then subjected to the milling step and the thermal treatment step. A positive electrode active material and a coin-type battery were manufactured under the same conditions as in Example 1 except for the above point, and then evaluated.

The composition of the obtained positive electrode active material was LiNiO₂-9%Li₃PO₄ when expressed by ratio by mass as shown in Table 1, and 0.929LiNiO₂-0.071Li₃PO₄ when expressed by ratio by number of moles.

The evaluation results are shown in Table 1.

### [Example 5]

The lithium transition metal complex oxide manufacturing step was not performed, and LiNi_{0.85}Co_{0.10}Al_{0.05}O₂ as a lithium transition metal complex oxide having a layered rock salt-type structure was subjected to the mixing step. Then, 0.97 g of the lithium transition metal complex oxide and 0.03 g of lithium phosphate were weighed out using an electronic balance, and mixed sufficiently in an agate mortar to prepare a mixture, which was then subjected to the milling step and the thermal treatment step. A positive electrode active material and a coin-type battery were manufactured under the same conditions as in Example 1 except for the above points, and then evaluated.

The composition of the obtained positive electrode active material was LiNi_{0.85}Co_{0.10}Al_{0.05}O₂-3%Li₃PO₄ when expressed by ratio by mass as shown in Table 1, and 0.976LiNi_{0.85}Ci_{0.10}Al_{0.05}O₂-0.024Li₃PO₄ when expressed by ratio by number of moles

### [Example 6]

The lithium transition metal complex oxide manufacturing step was not performed, and LiNi_{0.8}Mn_{0.1}Co_{0.1}O₂ as a lithium transition metal complex oxide having a layered rock salt-type structure was subjected to the mixings step. Then, 0.97 g of the lithium transition metal complex oxide and 0.03 g of lithium phosphate were weighed out using an electronic balance, and mixed sufficiently in an agate mortar to prepare a mixture, which was then subjected to the milling step and the thermal treatment step. A positive electrode active material and a coin-type battery were manufactured under the same conditions as in Example 1 except for the above points, and then evaluated.

The composition of the obtained positive electrode active material was LiNi_{0.8}Mn_{0.1}Co_{0.1}O₂-3%Li₃PO₄ when expressed by ratio by mass as shown in Table 1, and 0.975LiNi_{0.8}Mn_{0.1}Co_{0.1}O₂-0.025Li₃PO₄ when expressed by ratio by number of moles.

### [Comparative Example 1]

In Comparative Example 1, lithium phosphate was not mixed in the mixing step, and the milling step was not performed. That is, the lithium transition metal complex oxide obtained in the lithium transition metal complex oxide manufacturing step was directly subjected to the thermal treatment step. A positive electrode active material and a coin-type battery were manufactured under the same conditions as in Example 1 except for the above points, and then evaluated. The evaluation results are shown in Table 1.

### [Comparative Example 2]

A positive electrode active material and a coin-type battery were manufactured under the same conditions as in Example 1 except that the thermal treatment temperature in the thermal treatment step was changed to 610°C, and then evaluated.

The evaluation results are shown in Table 1.

**[Table 1-1]**

| | Composition | Average particle diameter of primary particles | Ratio by which element other than Li occupies Li site (3b site) |
|---|---|---|---|
| | | (nm) | (%) |
| Ex. 1 | LiNiO₂-3%Li₃PO₄ | 90 | 6.0 |
| Ex. 2 | LiNiO₂-3%Li₃PO₄ | 110 | 3.0 |
| Ex. 3 | LiNiO₂-3%Li₃PO₄ | 80 | 7.5 |
| Ex. 4 | LiNiO₂-9%Li₃PO₄ | 75 | 6.0 |
| Ex. 5 | LiNi_{0.85}Co_{0.10}Al_{0.05}O₂-3%Li₃PO₄ | 90 | 5.0 |
| Ex. 6 | LiNi_{0.8}Mn_{0.1}Co_{0.1}O₂-3%Li3PO₄ | 95 | 6.5 |
| Comp. Ex. 1 | LiNiO₂ | 260 | 1.5 |
| Comp. Ex. 2 | LiNiO₂-3%Li₃PO₄ | 60 | 9.0 |

**[Table 1-2]**

| | Ratio by which Li element occupies metal site (3a site) | Discharge capacity | Cycle characteristics |
|---|---|---|---|
| | (%) | (mAh/g) | (%) |
| Ex. 1 | 6.0 | 170.9 | 93.1 |
| Ex. 2 | 3.0 | 180.8 | 90.3 |
| Ex. 3 | 7.5 | 166.8 | 89.1 |
| Ex. 4 | 6.0 | 162.1 | 85.2 |
| Ex. 5 | 5.0 | 169.4 | 91.6 |
| Ex. 6 | 6.5 | 167.3 | 94.1 |
| Comp. Ex. 1 | 0.0 | 187.7 | 48.9 |
| Comp. Ex. 2 | 9.0 | 153.5 | 50.9 |

### (Evaluation Results)

As shown in Table 1, in Examples 1 to 6, positive electrode active materials containing secondary particles in which a plurality of primary particles were mutually agglomerated, and containing a lithium transition metal complex oxide having a layered rock salt-type structure and crystallized lithium phosphate, wherein the ratio by which an element other than lithium occupied the lithium site (3b site) of the lithium transition metal complex oxide was 3% or greater and 8% or less were obtained.

It was confirmed that when applied to a lithium ion secondary battery, the positive electrode active materials obtained in Examples 1 to 6 had a higher capacity retention rate than that of the positive electrode active materials obtained in Comparative Examples 1 and 2, which did not satisfy the above requirements. That is, it was confirmed that positive electrode active materials having excellent cycle characteristics were obtained in Examples 1 to 6.

It was also confirmed that when applied to a lithium ion secondary battery, the positive electrode active materials obtained in Examples 1 to 6 had a higher discharge capacity than that of the positive electrode active material obtained in Comparative Example 2.

The present application claims priority to Japanese Patent Application No. 2023-123254, filed with the Japan Patent Office on July 28, 2023, and the entire contents of Japanese Patent Application No. 2023-123254 are incorporated herein.

### REFERENCE SIGNS LIST

S1 mixing step
S2 milling step
S3 thermal treatment step

## Claims

1. A positive electrode active material for lithium ion secondary batteries, the positive electrode active material including secondary particles in which a plurality of primary particles are mutually agglomerated,
the positive electrode active material comprising:
a lithium transition metal complex oxide having a layered rock salt-type structure; and
crystallized lithium phosphate, and
wherein, in a crystal structure analysis of the lithium transition metal complex oxide having the layered rock salt-type structure by neutron diffraction, a ratio by which an element other than lithium occupies a lithium site (3b site) is 3% or greater and 8% or less.

2. The positive electrode active material for lithium ion secondary batteries according to claim 1,
wherein an average particle diameter of the primary particles is 20 nm or greater and 250 nm or less.

3. The positive electrode active material for lithium ion secondary batteries according to claim 1 or 2,
wherein, in the crystal structure analysis of the lithium transition metal complex oxide having the layered rock salt-type structure by neutron diffraction, a ratio by which a lithium element occupies a metal site (3a site) is 3% or greater and 8% or less.

4. The positive electrode active material for lithium ion secondary batteries according to claim 1 or 2,
wherein the positive electrode active material for lithium ion secondary batteries is represented by a general formula of kLi₃PO₄-(1-k)LiₛNi_{1-x-y-z}COₓMn_{y}M_{z}O_{2+α} (where 0<k<0.1, 0≤x≤0.35, 0≤y≤0.35, 0≤z≤0.10, 1.00≤s<1.30, 0≤α≤0.2, and an element M is at least one element selected from V, Mg, Mo, Nb, Ti, W, and Al).

5. The positive electrode active material for lithium ion secondary batteries according to claim 1 or 2,
wherein at least a part of surfaces of the primary particles of the lithium transition metal complex oxide having the layered rock salt-type structure is coated with the crystallized lithium phosphate, and the crystallized lithium phosphate is dispersed in the secondary particles of the lithium transition metal complex oxide having the layered rock salt-type structure or on surfaces of the secondary particles of the lithium transition metal complex oxide having the layered rock salt-type structure.

6. A method for manufacturing a positive electrode active material for lithium ion secondary batteries, the positive electrode active material including secondary particles in which a plurality of primary particles are mutually agglomerated, the method comprising:
a mixing step of mixing a lithium transition metal complex oxide having a layered rock salt-type structure with lithium phosphate, to prepare a mixture;
a milling step of applying mechanical stress to the mixture obtained in the mixing step, to obtain a milled product having an amorphous or low-crystallinity NiO-like rock salt-type structure; and
a thermal treatment step of raising a temperature of the milled product obtained in the milling step at a rate of 2°C/minute or lower and thermally treating the milled product at a temperature of 620°C or higher and 700°C or lower.

7. A lithium ion secondary battery, comprising at least:
a positive electrode;
a negative electrode; and
a nonaqueous electrolyte,
wherein the positive electrode comprises the positive electrode active material for lithium ion secondary batteries of claim 1 or 2.
